# EUROPÄISCHE PATENTSCHRIFT

(11) **EP 2 335 312 B1**
(45) Veröffentlichungstag und Bekanntmachung des Hinweises auf die Patenterteilung: **16.08.2017**
(21) Anmeldenummer: 09783562.3
(22) Anmeldetag: 29.09.2009
(51) Int. Cl.: H01M 4/88, H01M 8/02, H01M 8/12, H01M 8/0206, H01M 8/0232, H01M 8/0252

(54) **VERFAHREN ZUR HERSTELLUNG EINES INTERKONNEKTORS FÜR HOCHTEMPERATUR-BRENNSTOFFZELLEN, ZUGEHÖRIGE HOCHTEMPERATUR-BRENNSTOFFZELLE SOWIE DAMIT AUFGEBAUTE BRENNSTOFFZELLENANLAGE**
METHOD FOR PRODUCING AN INTERCONNECTOR FOR HIGH TEMPERATURE FUEL CELLS, ASSOCIATED HIGH TEMPERATURE FUEL CELL AND THUS BUILT FUEL CELL ASSEMBLY
PROCÉDÉ DE FABRICATION D'UN INTERCONNECTEUR POUR PILES À COMBUSTIBLE À HAUTE TEMPÉRATURE, PILE À COMBUSTIBLE À HAUTE TEMPÉRATURE CORRESPONDANTE ET SYSTÈME DE PILES À COMBUSTIBLE CONSTITUÉ DE PILES À COMBUSTIBLE DE CE TYPE

(30) Priorität: 30.09.2008 DE 102008049608
(43) Veröffentlichungstag der Anmeldung: 22.06.2011
(73) Patentinhaber: Siemens Aktiengesellschaft, 80333 München (DE)
(72) Erfinder: GREINER, Horst, 91301 Forchheim (DE); ZAMPIERI, Alessandro, 91052 Erlangen (DE)
(86) Internationale Anmeldenummer: PCT/EP2009/062635
(87) Internationale Veröffentlichungsnummer: WO 2010/037755

(56) Entgegenhaltungen:
- EP-A1- 1 760 817
- EP-A1- 1 850 412
- WO-A1-03/051529
- US-A- 4 874 678
- US-A1- 2003 134 171
- US-A1- 2007 126 137
- LU Y ET AL: "Numerical study of a flat-tube high power density solid oxide fuel cell" JOURNAL OF POWER SOURCES, ELSEVIER SA, CH, Bd. 153, Nr. 1, 23. Januar 2006 (2006-01-23), Seiten 68-75, XP025083690 ISSN: 0378-7753 [gefunden am 2006-01-23]

## Beschreibung

Die Erfindung bezieht sich auf ein Verfahren zum Herstellen eines Interkonnektors einer Hochtemperatur-Brennstoffzelle. Daneben bezieht sich die Erfindung auch auf die zugehörige Brennstoffzelle und eine damit aufgebaute Brennstoffzellenanlage.

Als Interkonnektor werden bei mit einem oxidischen Festelektrolyten versehenen Hochtemperatur-Brennstoffzellen (SOFC = Solid Oxide Fuel Cell) die Bereiche bezeichnet, mit denen die einzelnen Brennstoffzellen miteinander elektrisch in Reihe oder gruppenweise parallel kontaktiert werden. Diese Bereiche der SOFC müssen elektrisch gut leitfähig und gasdicht sein. Bei tubularen SOFC's besteht der Interkonnektor aus einem schmalen Bereich in axialer Richtung des röhrenförmigen Bauteils. Bei den so genannten HPD-Brennstoffzellen besteht der Interkonnektor aus einem gegenüber den Funktionsschichten eingelassenen Bereich guter Leitfähigkeit. Speziell bei HPD-Brennstoffzellen nach dem Δ-Prinzip ist dies der Trägerbereich des dreieckförmig gefalteten Aufbaus.

Bei der tubularen SOFC, die einen keramischen Träger hat, der gleichermaßen die Kathode realisiert, besteht der Interkonnektor aus einer keramischen Schicht aus LaCrO3, die durch atmosphärisches Plasmaspritzen aufgetragen wird. In parallelen Patentanmeldungen der Patentanmelderin mit gleicher Anmeldepriorität wird vorgeschlagen, als Träger für die Funktionsschichten eine poröse Metallstruktur zu verwenden. Dabei ist die Metallstruktur speziell Träger der Kathode. Mit solchen porösen metallischen Trägerstrukturen ergibt sich die Möglichkeit, die Betriebstemperatur der Brennstoffzellenanlage von etwa 1000°C auf einen Bereich zwischen 500°C und 700°C herabzusetzen. Aufbau und Bereitstellung der Peripherie wird durch die erniedrigten Betriebstemperaturen wesentlich vereinfacht.

Die porösen Metallträgerstrukturen können nach üblichen metallurgischen Verfahren hergestellt werden, beispielsweise Sintern, aber auch durch Extrusion oder Gießen. Derartige Trägerstrukturen werden anschließend mit den Funktionsschichten und insbesondere mit dem Interkonnektor versehen.

EP 1 760 817 A1 beschreibt eine Festoxid-Brennstoffzelle und ein Verfahren zu ihrer Herstellung. Die Brennstoffzelle weist eine erste Komponente mit einer porösen, Metall enthaltenden Schicht und einer kombinierten Elektrolyt- und Dichtschicht auf. Letztere ist auf der porösen, Metall enthaltenden Schicht aufgebracht. Außerdem ist eine zweite Komponente vorhanden, die ebenfalls eine poröse, Metall enthaltende Schicht aufweist, auf die eine kombinierte Interkonnekt- und Dichtschicht aufgebracht ist. Zum Herstellen der zweiten Komponente wird die Interkonnektschicht auf die poröse, Metall enthaltende Schicht aufgebracht. Danach werden die erste und die zweite Komponente gestapelt und anschließend gesintert.

WO 03/051529 A1 beschreibt ein Verfahren zum Herstellen dünner Filme. Beispielsweise kann eine Elektrolyt- oder Membranschicht gebildet werden, indem ein Elektrolyt- bzw. Membranfilm auf einen Grünling aufgebracht wird und diese Anordnung dann auf eine Temperatur geheizt wird, die geeignet ist, das Substrat zu sintern und die Beschichtung zu verdichten.

EP 1 850 412 A1 beschreibt eine Beschichtung mit mehreren Lagen, die beispielsweise auf einem metallischen Interkonnektor aufgebracht sein kann. Die Beschichtung soll gegen Oxidation bei hohen Temperaturen schützen.

US 2007/0126137 A1 beschreibt ein Verfahren zum Herstellen integrierter Bipolarplatten oder Diffusoren von Protonenaustauschmembran-Brennstoffzellen. Protonenaustauschmembran-Brennstoffzellen sind Niedrigtemperatur-Brennstoffzellen. Im Herstellungsprozess wird ein Vorläufermaterial, welches eine Mischung aus elektrisch leitfähigem Fasermaterial, einem Binder und einer Trägerflüssigkeit besteht, zu einer Vorform gegossen, die eine poröse Region aufweist. In die poröse Region wird ein Polymer-Matrixmaterial durch Infiltration eingebracht.

Aufgabe der Erfindung ist es daher, ein Verfahren anzugeben, mit dem definierte Bereiche in porösen Metallstrukturen mit dichten, elektrisch leitfähigen Kontaktierungen versehen werden können. Damit soll eine geeignete Hochtemperatur-Brennstoffzelle und eine zugehörige Brennstoffzellenanlage geschaffen werden.

Die Aufgabe ist erfindungsgemäß durch die Abfolge der Maßnahmen gemäß Patentanspruch 1 gelöst. Eine zugehörige Brennstoffzelle ist im Patentanspruch 8 und damit aufgebaute Brennstoffzellenanlage im Patentanspruch 12 angegeben. Weiterbildungen des Verfahrens und der zugehörigen Brennstoffzellen sind Gegenstand der abhängigen Ansprüche.

Gegenstand der Erfindung ist die Schaffung geeigneter, definierter Interkonnektorbereiche durch Aufbringen von leitfähigem Material und entsprechende thermische Behandlung. Dabei können die leitfähigen Materialien beispielsweise Folien, Bänder, Pasten oder Pulver sein. Insbesondere mit so genannter Lötfolie lässt sich eine genau definierte Geometrie einhalten.

Wesentlich ist bei der Erfindung, dass die poröse Metallstruktur im Wesentlichen nahe der Schmelztemperatur des aufgebrachten Materials erhitzt wird. Die Temperatur muss aber hoch genug sein, um die Viskosität des aufgebrachten Materials genügend herabzusetzen, um eine Infiltration in die Poren des porösen Metallmaterials zu erreichen. Die thermische Behandlung kann beispielsweise unter Vakuum oder reduzierender Atmosphäre ausgeführt werden. Durch Vorgabe der thermischen Behandlungszeit kann die Geometrie und Eindringtiefe des Lötmaterials in die poröse Matrix genau vorgegeben werden. Ein Eindringen und Abdichten der Poren des porösen Metallträgers erfolgt dabei ausschließlich in den Gebieten, an denen das Material aufgebracht ist. Damit lässt sich ein genau definierter und abgegrenzter Abdichtbereich an der gewünschten Stelle des porösen metallischen Trägers realisieren.

Beispiele für Lötmaterialien sind bekannte Nickel-, Kupfer- oder Kobalt-basierte Lötfolien oder Pulver/Pasten, aber auch andere Materialien, insbesondere Legierungen dieser Metalle können genutzt werden. Mit dieser Vorgehensweise können Interkonnektoren in unterschiedlichen Typen von SOFC geschaffen werden. Gegenüber dem bekannten Herstellungsverfahren bei der keramikbasierten SOFC ergeben sich erhebliche Einsparungen. Die Fertigung des neuen Interkonnektors in der metallbasierten SOFC ist einfach, billig, schnell und effektiv.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: anhand eines Schnitts den Aufbau einer HPD-Brennstoffzelle,
- Figur 2: das Schema der neuen Vorgehensweise zur Herstellung des Interkonnektors und
- Figur 3: ein mikroskopisches Bild eines metallischen porösen Trägers mit nach dem neuen Verfahren eingebetteten dichtem Interkonnektor im Übergangsbereich

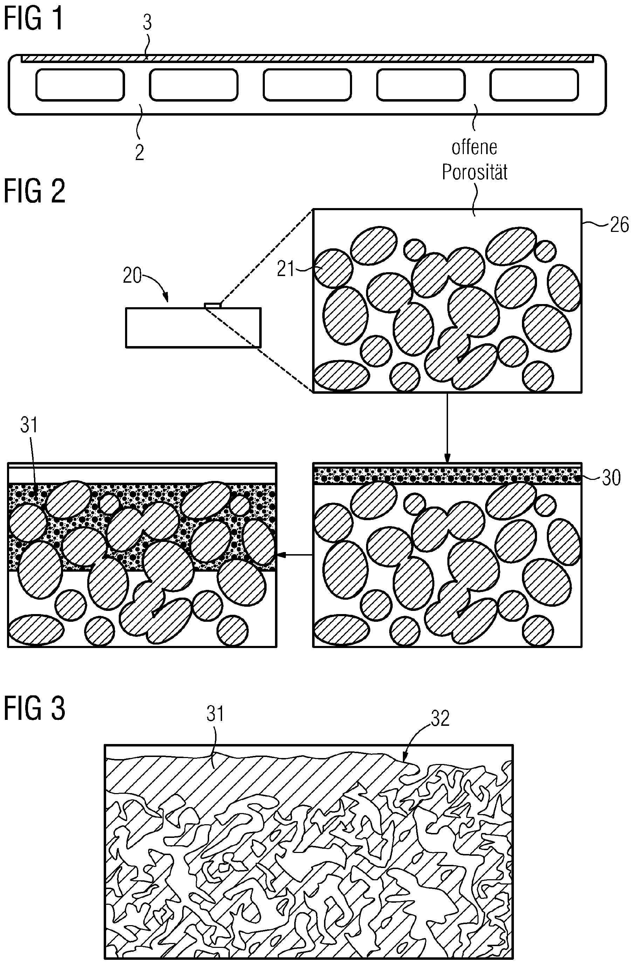

In Figur 1 ist die Struktur einer HPD-Brennstoffzelle dargestellt, bei der die einzelnen Luftkanäle rechteckig ausgebildet sind. Der metallische Träger ist mit 2 bezeichnet. Auf einer Seite trägt der Träger die Funktionsschichten, d.h. Kathode 1, Elektrolyt und Anode, was in Figur 1 nicht im Einzelnen ausgeführt ist.

In bekannter Weise können die Funktionsschichten jeweils aus mehreren materialmäßig angepassten Schichten bestehen. Hierzu wird auf den einschlägigen Stand der Technik verwiesen.

Durch Stapeln von Strukturen entsprechend Figur 1 ergibt sich das so genannte Bündel einer Brennstoffzellenanlage, bei der in den im Wesentlichen rechteckigen Kanälen Sauerstoff bzw. Luft und zwischen den Zellen Brenngas geführt werden. Hierzu wird ebenfalls auf den Stand der Technik verwiesen.

Wesentlich bei Figur 1 ist, dass entsprechend den Vorschlägen der parallelen Anmeldungen der Anmelderin die Trägerstruktur aus einem porösen Metall besteht, das für Luft und/oder Sauerstoff durchlässig ist. Innerhalb der Festkeramikelektrolytschicht kann dann die typische Brennstoffzellenreaktion unter Freisetzung elektrischer Ladung erfolgen.

In Figur 1 ist an der Oberseite der Tragstruktur 2 ein metallisch dichter Bereich als Interkonnektorschicht 3 eingelassen. Über diesen Bereich 3 wird der Strom von einer Zelle auf die nächste Zelle übertragen.

Im Schema der Figur 2 ist der poröse Metallträger als Ausgangspunkt der beschriebenen Vorgehensweise mit 20 bezeichnet. Entsprechend der vergrößerten Darstellung sind in der Metallstruktur einzelne Partikel 21 vorhanden, die bei der Herstellung einen Sinterverbund bilden. Dies bedeutet, dass innerhalb des Sinterverbundes offene Poren vorhanden sind, wie es bei Sinterwerkstoffen üblich ist. Die offene Porosität ist mit dem Bezugszeichen 26 angedeutet

Auf den porösen Sinterkörper 20 wird an der erforderlichen Stelle eine definiert ausgeschnittene Lötfolie 30 aufgelegt. Die Abmessungen der Lötfolie 30 definieren den späteren Interkonnektorbereich. Anschließend erfolgt eine thermische Behandlung nahe am Schmelzpunkt der Lotfolie, bei der das Lötfolienmaterial in den Sinterverbund eingezogen wird und die dort vorhandene Porosität abdichtet.

Die thermische Behandlung erfolgt im Vakuum oder anderer geeigneter Atmosphäre. Es ergibt sich im Ergebnis eine Struktur, bei der genau definiert der Bereich 31 dicht und komplett elektrisch leitfähig ist.

Letztere Struktur wird anhand der mikroskopischen Darstellung in Figur 3 verdeutlicht. Deutlich erkennbar ist hier der Sinterverbund der Trägerstruktur und der demgegenüber genau definierte metallisch dichte Bereich 31. Im Randbereichen 32 ergibt sich eine genaue Abgrenzung gegenüber der Porosität. Über den Bereich 31 kann die Kontaktierung einzelner Brennstoffzellen erfolgen.

Als Alternative zu der bei Figur 2 verwendeten Lötfolie können auch leitfähige Bänder ("tape"), Pasten oder Pulver verwendet werden. In jedem Fall lässt sich damit eine beachtliche Verringerung der Fertigungszeit und damit auch der Kosten des Prozesses erreichen. Es werden jeweils in einem automatisierten Prozessschritt genau definierte Interkonnektoren für tubulare/HPD oder Δ-Zellen mit metallbasiertem Träger erreicht.

Wie bereits beschrieben, lässt sich durch Stapelung einzelner Brennstoffzellen und Kontaktierung über die Interkonnektoren eine neue Brennstoffzellenanlage aufbauen, die sich durch Arbeitstemperaturen im Bereich von 500 bis 700°C auszeichnet.

## Patentansprüche

1. Verfahren zur Herstellung von Interkonnektoren bei metallgestützten Hochtemperatur-Brennstoffzellen, bei der eine poröse Metallstruktur Träger der Funktionsschichten aus Kathode, Festelektrolyt und Anode ist, mit folgenden Verfahrensschritten:
- Auf einem genau definierten Bereich der porösen Trägerstruktur wird das elektrisch leitfähige Material aufgebracht,
- durch eine thermische Behandlung mit einer Temperatur, die hoch genug ist, um die Viskosität des elektrisch leitfähigen Materials genügend herabzusetzen, um eine Infiltration in die Poren des porösen Metallmaterials zu erreichen, wird in diesem Bereich der Sinterverbund abgedichtet und es entsteht ein elektrisch leitfähiger Interkonnektor.

2. Verfahren nach Anspruch 1, **dadurch gekennzeichnet, dass** als leitfähiges Material eine Lötfolie definierter Geometrie und Zusammensetzung verwendet wird.

3. Verfahren nach Anspruch 1, **dadurch gekennzeichnet, dass** ein elektrisch leitfähiges und gasdichtes Band definierter Geometrie verwendet wird.

4. Verfahren nach Anspruch 1, **dadurch gekennzeichnet, dass** eine leitfähige Paste verwendet wird.

5. Verfahren nach Anspruch 1, **dadurch gekennzeichnet, dass** ein leitfähiges Pulver verwendet wird.

6. Verfahren nach Anspruch 1, **dadurch gekennzeichnet, dass** die thermische Behandlung bei einer Temperatur unterhalb der Schmelztemperatur des Trägermaterials durchgeführt wird.

7. Verfahren nach Anspruch 1, **dadurch gekennzeichnet, dass** zur Unterstützung des Infiltrationsprozesses die thermische Behandlung unter Vakuum durchgeführt wird.

8. Hochtemperatur-Brennstoffzelle mit Kathode und Anode als Elektroden, zwischen denen ein Festelektrolyt angeordnet ist, wobei als Träger für die Funktionsschichten eine poröse metallische Struktur verwendet wird und in der Struktur ein metallisch dichter, elektrisch leitfähiger Bereich als Interkonnektor (3) vorhanden ist, **dadurch gekennzeichnet, dass** der metallisch dichte, elektrisch leitfähige Bereich ein in die Poren des porösen Metallmaterials infiltriertes elektrisch leitfähiges Material aufweist.

9. Hochtemperatur-Brennstoffzelle nach Anspruch 8, **gekennzeichnet durch** eine tubulare Struktur.

10. Hochtemperatur-Brennstoffzelle nach Anspruch 8, **gekennzeichnet durch** eine HPD-Struktur.

11. Hochtemperatur-Brennstoffzelle nach Anspruch 10, **gekennzeichnet durch** ein Δ-Design.

12. Hochtemperatur-Brennstoffzellenanlage mit Brennstoffzellen gemäß einem der Ansprüche 8 bis 11, wobei mehrere Brennstoffzellen zu einem Bündel elektrisch in Reihenschaltung geschaltet sind, **dadurch gekennzeichnet, dass** die einzelnen Brennstoffzellen über den Interkonnektor mit metallisch dichtem Material kontaktiert sind.

13. Verwendung einer Hochtemperatur-Brennstoffzellenanlage nach Anspruch 12, bei einer Arbeitstemperatur der Brennstoffzellenanlage zwischen 500°C und 700°.

## Claims

1. Method for producing interconnectors for metal-based high temperature fuel cells, wherein a porous metal structure is the substrate of the functional layers consisting of cathode, solid electrolyte and anode, comprising the following steps:
- the electrically conductive material is applied to a precisely defined region of the porous substrate structure,
- by means of heat treatment at a temperature that is high enough to reduce the viscosity of the electrically conductive material sufficiently to achieve infiltration into the pores of the porous metal material, the sintered compound is sealed in this region and an electrically conductive interconnector is produced.

2. Method according to claim 1, **characterised in that** a brazing foil of defined geometry and composition is used as the conductive material.

3. Method according to claim 1, **characterised in that** an electrically conductive and gas-impermeable tape of defined geometry is used.

4. Method according to claim 1, **characterised in that** a conductive paste is used.

5. Method according to claim 1, **characterised in that** a conductive powder is used.

6. Method according to claim 1, **characterised in that** the heat treatment is carried out at a temperature below the melting point of the substrate material.

7. Method according to claim 1, **characterised in that** the heat treatment is carried out under vacuum conditions to assist the infiltration process.

8. High temperature fuel cell with a cathode and anode as electrodes between which a solid electrolyte is disposed, wherein a porous metal structure is used as the substrate for the functional layers and an impermeable metal, electrically conductive region is provided in said structure as an interconnector (3), **characterised in that** the impermeable metal, electrically conductive region has an electrically conductive material infiltrating into the pores of the porous metal material.

9. High temperature fuel cell according to claim 8, **characterised by** a tubular structure.

10. High temperature fuel cell according to claim 8, **characterised by** an HPD structure.

11. High temperature fuel cell according to claim 10, **characterised by** a Δ-design.

12. High temperature fuel cell system comprising fuel cells according to one of claims 8 to 11, wherein a plurality of fuel cells are electrically connected in series to form a bundle, **characterised in that** the individual fuel cells are contacted via an interconnector with impermeable metallic material.

13. High temperature fuel cell system according to claim 12, **characterised in that** the operating temperature of the fuel cell system is between 500 and 700°C.

## Revendications

1. Procédé de fabrication d'interconnecteurs pour des piles à combustible à haute température, assistées par du métal, dans lequel une structure métallique poreuse est un support des couches fonctionnelles de la cathode, de l'électrolyte solide et de l'anode, comprenant les stades de procédé suivants :
- on dépose la matière conductrice de l'électricité sur une région définie précisément de la structure poreuse de support,
- par un traitement thermique à une température, qui est suffisamment haute pour abaisser suffisamment la viscosité de la matière conductrice de l'électricité, afin d'obtenir une infiltration dans les pores de la matière métallique poreuse, on rend étanche le composite fritté dans cette région et il se crée un interconnecteur conducteur de l'électricité.

2. Procédé suivant la revendication 1, **caractérisé en ce que** l'on utilise, comme matière conductrice, une feuille de brasure de géométrie et de composition définie.

3. Procédé suivant la revendication 1, **caractérisé en ce que** l'on utilise une bande conductrice d'électricité et étanche au gaz de géométrie définie.

4. Procédé suivant la revendication 1, **caractérisé en ce que** l'on utilise une pâte conductrice.

5. Procédé suivant la revendication 1, **caractérisé en ce que** l'on utilise une poudre conductrice.

6. Procédé suivant la revendication 1, **caractérisé en ce que** l'on effectue le traitement thermique à une température inférieure au point de fusion de la matière de support.

7. Procédé suivant la revendication 1, **caractérisé en ce que**, pour faciliter l'opération d'infiltration, on effectue le traitement thermique sous vide.

8. Pile à combustible à haute température, ayant une cathode et une anode comme électrodes, entre lesquelles est disposé un électrolyte solide, dans lequel il est utilisé, comme support pour les couches fonctionnelles, une structure métallique poreuse et, dans la structure, il y a, comme interconnecteur (3), une région dense métalliquement et conductrice de l'électricité, **caractérisée en ce que** la région dense métalliquement et conductrice de l'électricité a une matière conductrice de l'électricité infiltrée dans les pores de la matière métallique poreuse.

9. Pile à combustible à haute température suivant la revendication 8, **caractérisée par** une structure tubulaire.

10. Pile à combustible à haute température suivant la revendication 8, **caractérisée par** une structure HPD.

11. Pile à combustible à haute température suivant la revendication 10, **caractérisée par** une conception Δ.

12. Installation de piles à combustible à haute température, comprenant des piles à combustible suivant l'une des revendications 8 à 11, dans laquelle plusieurs piles à combustible sont montées en série électriquement en un faisceau, **caractérisée en ce que** les diverses piles à combustible sont mises en contact par de la matière dense métalliquement, par l'intermédiaire de l'interconnecteur.

13. Utilisation d'une installation de piles à combustible à hauteur température suivant la revendication 12, à une température de fonctionnement de l'installation de piles à combustible comprise entre 500°C et 700°.
